(19) Europäisches Patentamt
European Patent Office
Office européen des brevets

(11) **EP 2 259 414 A1**

(12) **EUROPEAN PATENT APPLICATION**

(43) Date of publication:
**08.12.2010 Bulletin 2010/49**

(51) Int Cl.:
**H02M 1/34** $^{(2007.01)}$    **H02M 3/335** $^{(2006.01)}$

(21) Application number: **09162102.9**

(22) Date of filing: **05.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicants:
• **NXP B.V.**
  **5656 AG Eindhoven (NL)**

• **Hardingham, Christopher Mark**
  **Redhill, Surrey RH1 1DL (GB)**

(72) Inventor: **Degen, Peter**
  **5656 AG, Eindhoven (NL)**

Remarks:
Amended claims in accordance with Rule 137(2) EPC.

(54) **A limiting circuit for an active clamp and a method of controlling a converter having a limiting circuit**

(57) A limiting circuit (12) for an active clamp comprising a reset switch (8) and reset capacitor (9), for use in particular with a forward converter is disclosed. The limiting circuit (12) provides for limiting the voltage across the reset switch (8) by disconnecting the reset switch (8) from the reset capacitor (9) during a part of the switching cycle when the voltage across reset capacitor (9) is too negative.

The reset switch (8) may be grounded by the limiting circuit or connected to another reference voltage. In another embodiment the reset switch (8) is capacitively coupled to ground and thereby enables detection of fault conditions. Further, the voltage across a switch (14) of limiting circuit (12) may be constrained by the breakdown value of a Zener diode (17).

Fig. 5

EP 2 259 414 A1

**Description**

Field of the Invention

This invention relates to DC-DC converters. In particular it relates to DC-DC converters having an active clamp for the voltage across the transformer.

Background of the Invention

Forward converters are a class of switched mode power converters, such as those widely used for DC-DC conversion. Switched mode power converters can provide either isolated or non-isolated power; in the case of mains-rectified input power, a transformer is typically provided in order to provide the isolation. Forward converter are isolated converters which typically convert one DC voltage to a lower DC voyage level, for example to provide a 12V voltage rail from a rectified mains voltage supply which normally is between 150 and 400V. It should be noted at the outset, that although, for a easier understanding of the invention, forward converters will be primarily discussed herebelow, the invention is not limited to forward converters, but embraces other types of DC-DC converters. As a non-limiting example, the invention can be used with fly-back converters, and in this case in particularly, the operation of the active clamp is essentially the same as for forward converters.

In a typical forward converter, the primary coil of a transformer is switchably connected to the rectified mains input, and the output from the secondary coil is rectified by diodes, then filtered by an output stage comprising a series inductor and parallel capacitor. The converter switches at a frequency which is high relative to the mains cycle.

A primary side switch controls the switching on and off of the transformers primary coil and is typically constructed as a field effect transistor (FET): it is thus often referred to as the control FET; it is normally provided on the ground side of the primary coil, and driven by a pulse width modulated (PWM) signal. The duty cycle (the ratio of the length of time that the second terminal of the primary coil of the transformer is connected to ground such that the primary coil is connected across the rectified mains supply, compared to the total period of the PWM signal) of the control FET determines the magnitude of the output voltage relative to the input voltage. The node between the control FET and the primary coil is conventionally termed the half-bridge node.

When the control FET is opened to disconnect the primary coil from the supply the transformer needs to be demagnetised. This is typically achieved by applying a negative voltage across the transformer during the period the control FET is open. It is known, for example from United States patent publication US-A-4.441, 146, to provide a circuit to limit the excursion of the voyage at the half-bridge node, by means of an active clamping circuit. An active clamp comprises series arrangement of a switch and a parallel diode and capacitor Typically, the parallel diode is integral with the switch, in the case that the switch is a FET and the parallel, diode is the backgate diode of the FET. One side of the active clamp is connected to the half-bridge node; the other is connected to a reference DC voltage (which is typically, but not necessarily), either the input voltage or ground. When the control FET is switched off, the half-bridge node is clamped via the diode to the voltage on the capacitor. During the clamping period, the switch in the active clamp circuit is closed. Due to the higher voltage at the capacitor compared to the input voltage, the transformer becomes demagnetized.

Alternative circuits, such as "third winding reset" are known which can regulate the demagnetisation of the primary coil by other means; however, active clamping circuits beneficially limit the maximum voltage which can occur across the control FET.

One disadvantage of known active clamping circuits is the requirement for the clamping switch, also referred to hereinafter as the reset switch, to be able to withstand high voltages. As will be described in more detail below, at times during the switching cycle, the voltage across the reset switch can be higher than the input voltage, by a "reset voltage". For a typical 400V input application, this reset voltage may be as high as 550V or even 600V. As a result, the reset switch of known active clamping circuits has to be able to withstand an inconveniently high voltage, and thus must have an undesirably high reverse voltage breakdown (BVds). Whereas the control FET is generally an external component, and thus BVds can be selected from a range of different available voltage ratings for BVds, it would be desirable to be able to integrate the reset switch or at least the driver - into the controller IC: for the controller it is problematic to increase the maximum voltage.

There is thus an ongoing need for a clamping circuit which does not require such a high breakdown voltage reset switch.

Summary of the invention

It is an object of the present invention to enable an active champing circuit that can limit or avoid high voltage across the reset switch, and thereby reduce or eliminate the need for a high reverse breakdown requirement on the reset switch.

According to an aspect of the invention there is provided a limiting circuit configured for use in an active clamping circuit for a DC-DC converter, the active clamping circuit comprising a series arrangement of a switch (with a parallel diode) and a capacitor, wherein the limiting circuit comprises a first node and a second node, is configured to be connected in series between the switch and the capacitor such that the first node is connected to the switch and the second node is connected to the capacitor, and is arranged to, in use, limit the voltage across the switch.

In embodiments, the limiting circuit is configured to connect the first node either to the second node or not, in dependence on the voltage at the second node. By disconnecting the first node from the second node, the limiting circuit prevents excess voltage being built up across the switch.

In embodiments, there is provided a limiting circuit further comprising a limit switch connected between the first node and the second node and having a control terminal which is connected to a non-negative voltage by means of a resistance, and a bypass diode connected between the first node and the second node, such that, in use, the voltage across the switch is limited to no more than an input voltage of the converter less the sum of the non-negative voltage and a threshold voltage of the limit switch. Since the controller cannot easily handle negative voltages, the clamping voltage should be positive. To assure the clamp is on the clamping voltage should be lower than the voltage on the switch less the threshold voltage. Thus a range of values is possible for the clamping voltage.

In preferred embodiments, the non-negative voltage is ground. Ground is a particularly convenient clamping level. The connection to ground thereby prevents the voltage at the first node from going negative.

In embodiments, there is provided a limiting circuit further comprising a Zener diode between the first node and the control terminal. Since the first node, in use, is also in connection with the source of the limit switch, the Zener diode acts to ensure that the gate-source voltage of the limit switch does not exceed a predetermined maximum, thus protecting the limit switch.

In preferred embodiments, there is provided a limiting circuit further comprising at least one of a first diode connected between the control terminal and the ground, and a second diode arranged to be connected between the first node and a torminal of the capacitor opposite that connected to the second node, and a third diode arranged to be connected between the second node and a terminal of the switch opposite that connected to the first node. The terminal of the capacitor opposite that connected to the second node is hereinafter also referred to as the half-bridge node. Advantageously, the first diode acts to ensure that the voltage on the gate of the limit switch does not go below the ground voltage, which could otherwise occur via the drain-gate capacitance of the limit switch during high transients on the limit switch; similarly advantageously, the second diode may ensure that the voltage at the first node is at ground when the half-bridge node is at ground; moreover, the third diode provides clamping capably of the half-bridge node.

The second diode can also prevent the first node from floating, when the limit switch is open.

According to another aspect of the invention, there is provided a circuit arrangement for a DC-DC converter, the circuit arrangement comprising a limiting circuit as described above and a sub-circuit configured to be connected between the terminal of the switch opposite the first node and the ground.

Beneficially the sub-circuit comprises a parallel resistor arranged in parallel with a series combination of a second capacitor and a sense resistor. The parallel resistor is useful in ensuring that the capacitor's voltage does not exceed the input voltage, in the case of leakage through the clamping capacitor. The sense resistor can be used to check for, for instance, fault conditions in the transformer.

Preferably the circuit arrangement further comprises a Zener diode configured to be connected between the second node and a terminal of the capacitor opposite to that connected to the second node. Beneficially, the Zener diode may limit the maximum voltage across the limit switch. Furthermore, by the inclusion of the Zener diode, the voltage across the second capacitor can then exceed the input voltage such that the added voltages of both capacitors equals the required voltage to demagnetise the transformer.

According to a further aspect of the invention, there is provided a controller for a forward converter comprising a Smiting circuit according to any preceding claim.

According to a yet further aspect of the present invention, there is provided a method of limiting the voltage across a switch which forms part of a clamping circuit for a forward converter, the switch being connected between an input terminal of the forward converter and a first node, the clamping circuit further comprising a capacitor connected between a half-bridge node of the forward converter and a second node, the method comprising connecting the first node to the second node or clamping to a ground, in dependence on the voltage at the second node and by means of a limit switch.

Beneficially, the method further comprises limiting the voltage across the limit switch by means of a series arrangement of a further capacitor and a sense resistor, the series arrangement being connected, in parallel with a further resistor, between the terminal of the switch which is opposite the first node and ground, there being a diode between the terminal of the switch which is opposite the first node and the input terminal of the forward converter, together with a Zener diode between the second node and the half-bridge node.

These and other aspects of the invention will be apparent from, and elucidated with reference to, the embodiments described hereinafter.

Brief description of Drawings

Embodiments of the invention will be described, by way of example only, with reference to the drawings, in which

Fig. 1 is a simplified schematic of a known forward converter incorporating an active clamp;
Fig. 2 shows first waveforms associated with the forward converter of figure 1;
Fig. 3 shows the calculated variation of the reset voltage with the input voltage in an exemplary forward converter;
Fig. 4 shows a simplified schematic of an application of a forward of a converter including an active clamp integrated into a controller;
Fig. 5 shows a schematic of a forward converter, including an active clamp with a limiting circuit according to an embodiment of the invention:
Fig. 6 shows various waveforms associated with the circuit of figure 5; and
Fig. 7 shows a schematic of a forward converter according to a further embodiment of the invention.

It should be noted that the Figures are diagrammatic and not drawn to scale. Relative dimensions and proportions of parts of these Figures have been shown exaggerated or reduced in size, for the sake of clarty and convenience in the drawings, The same reference signs are generally used to refer to corresponding or similar feature in modified and different embodiments

Detailed description of embodiments

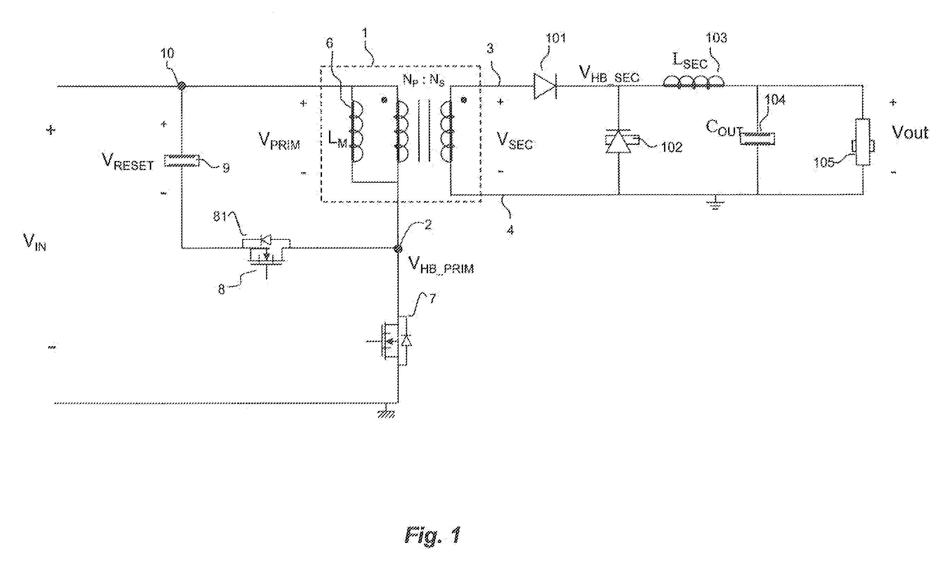

A known forward converter including an active clamp is illustrated schematically in Figure 1. The circuit comprises a transformer 1, having a primary coil between first and second terminals 10 and 2 respectively and a secondary coil between third and fourth terminals 3 and 4 respectively, and turns ratio Np:Ns. The primary coil is switchably connected to a DC input voyage Vin between node 10 and ground the first terminal of the transformer 5 is connected to the DC voltage at node 10. A switch 7, generally referred to as the primary control FET (field effect transistor), or low-side transistor, connects the second terminal 2 of the transformer 1 to ground. Terminal 2 of the transformer between the primary coil and the control FET may also be referred to as the half bridge node. Although there is not a physical second coil on the primary side, the figure is drawn with the magnetising inductance (Lm) 6 on the primary side of the transformer, shown separately from the primary coil.

The secondary coil of transformer 1 is connected to the secondary side circuit through terminals 3 and 4. The secondary side circuit comprises rectifying diodes 101 and 102 and an output filter comprising inductor Lsec 103 and output capacitor Cout 104. In this example, the load is shown as a resistive load 105.

A clamping circuit is provided on the primary side of the transformer 1. The clamping circuit comprises a switch 8 with backgate diode 81 and a capacitor 9. Switch 8 is normally a second FET, and generally referred to as the reset FET or high-side transistor. It is connected between the half bridge node 2 and capacitor 9, the other terminal of which is connected to the DC input voltage at supply terminal 10.

As shown in Figure 1 the clamping circuit comprising switch 8, which includes back-gate diode 81, and capacitor 9 is connected to the supply voltage at node 10. In other forward or other DC-DC converters in general, the clamping circuit may, by capacitor 9, equally be connected to ground, or another DC voltage, without affecting the way of working of the active clamp topology.

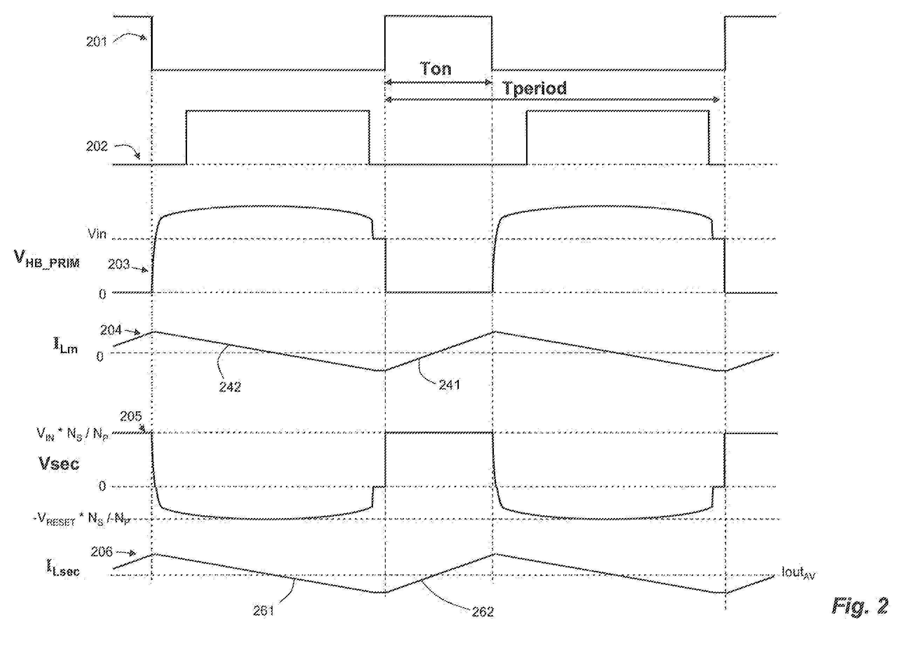

Various waveforms associated with the forward converter shown in figure 1 are illustrated in figure 2. From the top, the figure shows at 201 the status of the primary control FET 7, and at 202 the status of the reset FET 8. In the both of these waveforms "high" corresponds to the switch being closed, that is to say the switch is on, and "low" corresponds to the switch being open, that is to say the switch is off. The voltage at the half bridge node 2, $V_{HB\_PRIM}$, is shown at 203, and the "magnetising current" through the primary coil at 204. What is meant by "magnetising current" will be described in more detail below. Similarly, the voltage across the secondary coil, Vsec, that is to say the voltage between terminals three and four of the transformer, is shown at 205, and the current through the secondary side inductor 103, $I_{Lsec}$, is shown at 206.

When the primary control switch 7 is on, that is, during the interval Ton, the voyage 203 at the half bridge node is equal to zero (*i.e.* it is at ground). Thus the voltage across the primary coil of the transformer, *i.e.* the voltage between node 10 and node 2, (not shown in Figure 2) equals the input voltage. The voltage 205 across the secondary side of the transformer, *i.e.* the voltage between node 3 and 4, is then, based on the characteristics of a transformer, equal to:

$$V_{SEC} = V_{IN} \cdot \frac{N_s}{N_p} \tag{1}$$

As generally the voltage at the secondary winding of the transformer is higher then the output voltage, diode 101 will be conducting and the current $I_{Lsec}$ through the output coil 103 increases at a rate (neglecting the voltage drop across the diode) of:

$$\frac{dI_{Lsec}}{dt} = \frac{V_{IN} \cdot \frac{N_s}{N_p} - Vout}{L_{SEC}} \tag{2}$$

as shown by curve 206 during the interval Ton (that is, at 262).

At the same time (that is, during the interval Ton) the current $I_{Lm}$ through the magnetizing inductance, illustrated in Figure 1 by a parallel inductor 6, increases (as shown at 241) by:

$$\frac{dI_{LM}}{dt} = \frac{V_{IN}}{L_M} \tag{3}$$

When the primary control FET 7 is switched off, the current through the magnetizing inductance 6, which may also be referred to as the magnetizing current, continues to flow, via the backgate diode of FET 8, into the reset capacitor 9. The skilled person will appreciate that the back-gate diode is not a separate component, but is an integral part of the FET due to its construction, From the moment that the control FET is opened, the magnetizing current $I_{Lm}$ will decrease, as shown at 242, at a rate given by:

$$\frac{dI_{LM}}{dt} = -\frac{V_{RESET}}{L_M} \tag{4}$$

Before the magnetizing current reaches zero, and at a predetermined moment, which can be chosen relatively arbitrarily according to the control algorithm in use provided that it is after the current starts to flow through the back-gate diode and before the current reaches zero, the reset FET 8 is switched on which allows the magnetizing current to flow in the opposite direction.

Because of the point of the reset voltage, there will be a *negative* voltage across the primary winding of the transformer when the primary FET 7 is off. The voyage at the secondary winding of the transformer is then:

$$V_{SEC} = -V_{RESET} \cdot \frac{N_S}{N_P} \tag{5}$$

As the voyage across the secondary rectifying diode 101 is then negative, it will block the current. The current through the secondary coil 103 will continue to flow via the freewheel diode 102, but will decrease by (neglecting the voltage drop across the diode):

$$\frac{dI_{Lsec}}{dt} = -\frac{V_{OUT}}{L_{SEC}} \tag{6}$$

From the above-mentioned formulas of the secondary coil current, the output voyage can be derived as a function of the input voltage, being:

$$V_{OUT} = \delta \cdot V_{IN} \cdot \frac{N_S}{N_P} \qquad (7)$$

where the δ is the duty cycle, defined by Ton / Tperiod, Tperiod being the switching period of the converter.

Before the primary FET 7 is switched on again, the reset switch 8 is switched off. As the magnetizing current continues to flow towards the DC input voyage supplied at node 10, this magnetizing current will lower the voltage $V_{HB\_PRIM}$ at the half-bridge node 2 until it reaches the input voltage. At that time it is clamped at the input voltage Vin, provided that the rejected output current (lprim = lout * Np / Ns) is higher then magnetizing current.

From the above-mentioned formulas of the primary magnetizing current, the reset voltage can be derived as a function of the input voltage, being (neglecting the transition time when the voltage across the primary winding of the transformer switches from the input voltage to the reset voltage and *vice versa*):

$$V_{RESET} = V_{IN} \cdot \frac{\delta}{(1-\delta)} \qquad (8)$$

where the required duty cyde δ is chosen according to the input voltage, transformer ratio and the required output voltage (from equation (7):

$$\delta = \frac{V_{out} \cdot N_P}{V_{IN} \cdot N_s} \qquad (9)$$

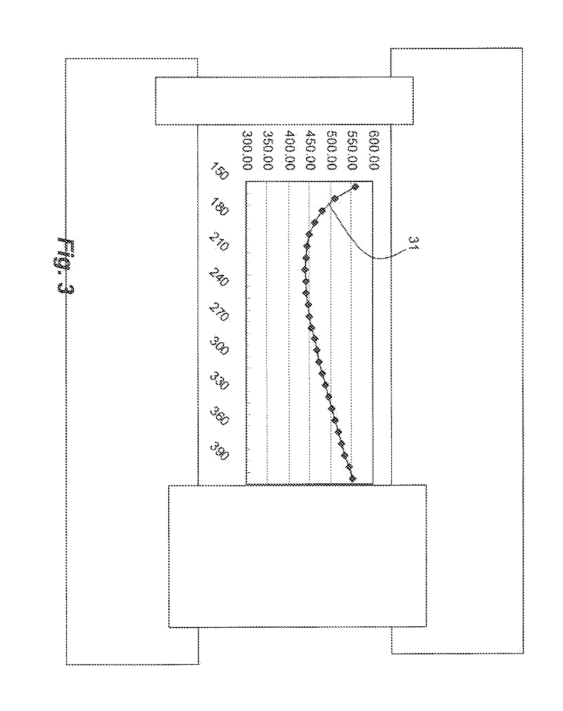

Thus the reset voyage $V_{RESET}$ has a non-linearly relationship with $V_{IN}$. Figure 3 shows an exemplary plot of the maximum voltage 31 at the VHB_PRIM node, which is equal to the sum of the input voltage $V_{IN}$ and the reset voltage $V_{RESET}$, as a function of the input voltage, for a forward converter with a fixed turns ratio. So this also vanes non-linearly with input voltage. The figure shows that although the input voltage is 400V maximum, the maximum voltage at the $V_{HB\_PRIM}$ node can be up to 560V. In the circuit of Figure 1, the primary FETs - both the reset FET 8, and the control FET 7 - must be able to withstand this voltage, and thus must have higher breakdown voltage (BVds). Even worse, taking into account a typical derating factor of 20% (the derating factor is the margin between the required maximum voltage of the applied components and the maximum voltage in the application) and possible voltage spikes, the primary FETs must have a minimum breakdown voltage of 700V.

In most applications, the primary control FET 7 is an external FET. That is to say, it is a discrete device. Since such discrete devices are available at different BVds, it is normally no problem to choose the appropriate FET. However, it would be desirable to be able to integrate the Reset FET 8 into a control circuit, and thus it is desirable to minimise the BVds of this FET,

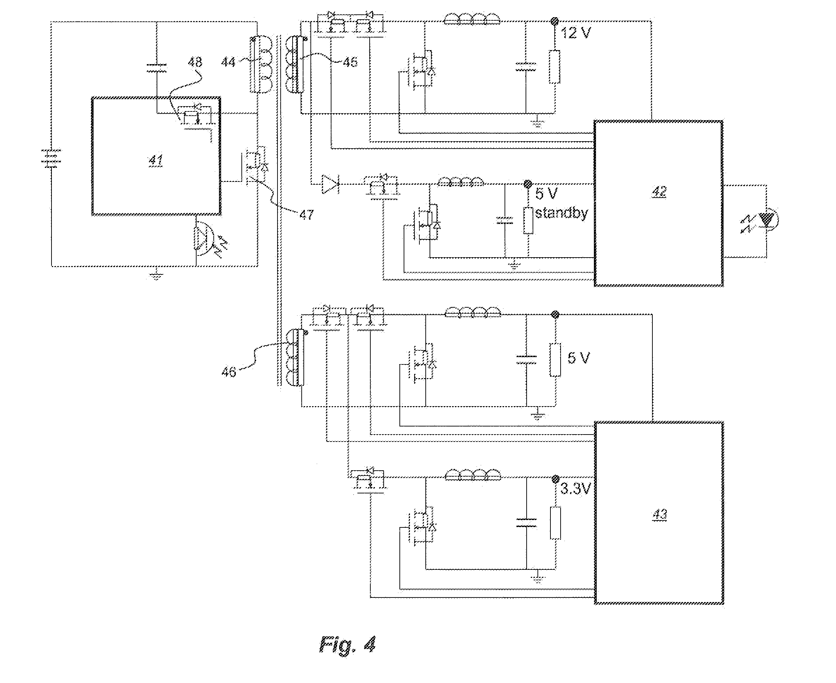

Figure 4 shows a simplified application diagram of an exemplary PC application with an active clamp forward converter. The transformer has a primary coil 44, switched by means of a discrete control FET 47, and a pair of secondary coils 45, 46, each of which provide a pair of output voltages (12V and 5V standby, and 5V and 3.3V respectively), by means of their respective turns ratios and secondary side circuits. This circuit, which corresponds to a GreenChip application from NXP Semiconductors, uses a chip-set comprising a primary controller 41 (such as, for example, the TEA1771 from NXP Semiconductors), and a pair of secondary controllers 42, and 43 (such as TEA1782 and TEA 1782. one of which is also a stand-by controller). In such an application it is desirable to integrate at least part of an active clamping circuit, including a reset FET 48, into the primary controller 41. (Depending on the size of the reset capacitor, it may not be possible or practicable to integrate that into the controller.). Although it may be desirable to integrate these switches, but is in practice it is very difficult or impossible. The circuit is therefore implemented with these as external switches. However, their drivers and levelshifters are integrated. The reason that these switches are external are because they have to handle very high currents (up to 20A) and therefore dissipate high power and need to be cooled via a heatsink.

None-the-less, the primary reset switch only has to handle the magnetizing current (which is max. up to 0.1A peak) and can therefore be integrated.

Although it is possible to provide an integrated FET with a BVds of 700V, the additional constraints imposed on integrated components, relative to discrete components, makes this undesirable, It is desirable to minimize the maximum voltage across the reset switch, to facilitate an integrated reset switch.

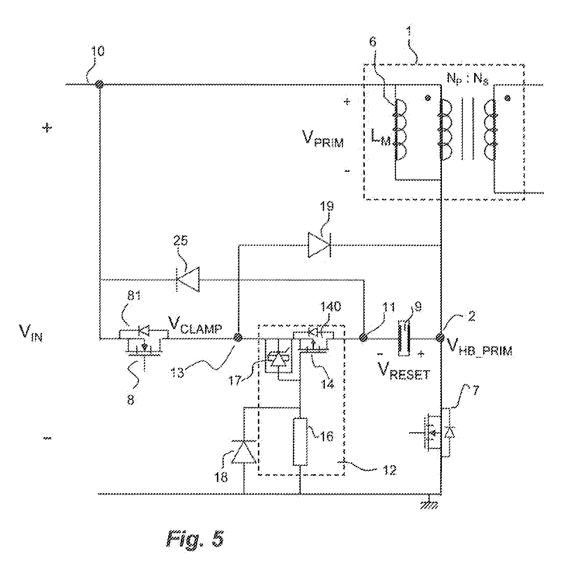

A circuit in accordance with a first embodiment of the present invention is shown in Figure 5.

The circuit is similar to the active clamp shown in Figure 1, However, in this embodiment, the relative positions of the reset capacitor 9 and the reset switch 8 are exchanged, such that the capacitor 9 is connected to the half-bridge node and the reset switch 8 is connected to the supply voltage node 10. in addition, a clamping circuit 12, (hereinafter referred to as a Smiting circuit, so as to avoid confusion with a clamping circuit comprising an active clamp *in toto*) is introduced between the reset capacitor 9 and reset switch 8. The Smiting circuit (which acts to limit the voltage across the reset switch, as will be described below) comprises a switch 14, also hereinafter referred to as a limit switch. Limit switch 14 has its source and drain connected to the reset switch 8 and reset capacitor 9 respectively at respective first and second nodes 13 and 11. The limit switch 14 includes a bypass diode 140 - which typical is the back-gate diode of the switch itself, when implemented as a MOSFET. The gate of the limit switch is connected to ground by means of a resistor 16. Although not mandatory, in this embodiment a Zener diode 17 is connected between the gate and source of limit switch 14. Similarly, a further diode 18 is optionally connected across the grounding 16. Moreover, another optional diode 19 is provided between the first node 13 and the half bridge node 2. Also an optional diode 25 is connected between the second node 11 and the input voyage node 10.

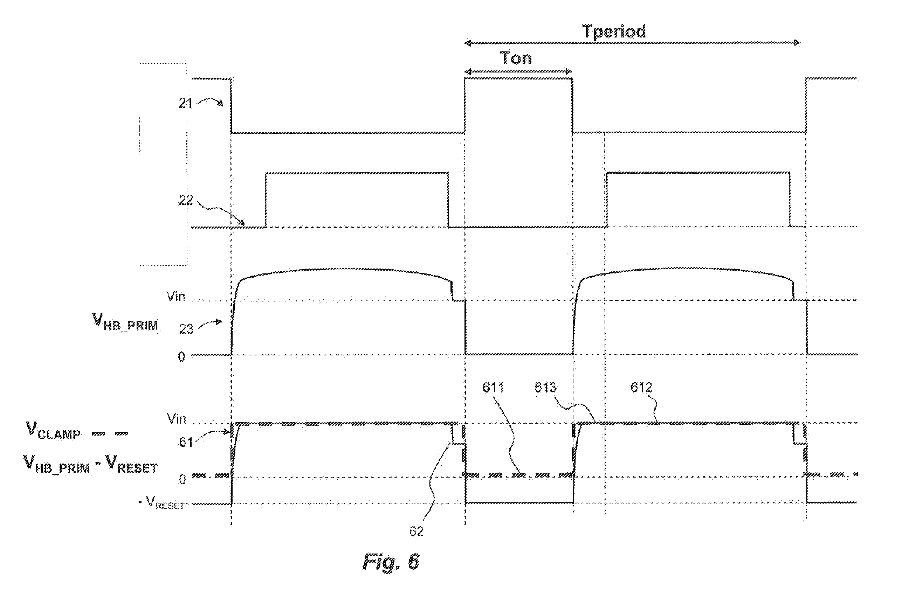

The voltage at the half bridge node $V_{HS\_PRIM}$ is identical to that in the active clamp of Figure 1 (which thus ensures proper demagnetization of the transformer). However, the division of this voltage across the active clamp circuit is different. The voltage at the left side of the reset capacitor, node 11, equals the voltage at the $V_{HB\_PRSM}$ node minus the reset voltage (as will be described below with reference to figure 6.). The voyage Vclamp at node 13 equals the voltage at node 11 when this voltage is higher then ground level plus the threshold voltage (Vth) of limit switch 14 (which is typically about 3V since the limit switch is typically implemented as a PMOS device) (*i.e.* > O+Vth) When the voltage at node 11 is below this voltage (0+Vth), limit switch 14 is automatically switched off because its gate is connected to ground via resistor 16, The voltage Vclamp at node 13 is then limited to ground level (0). Zener diode 17 ensures that the gate-source voltage of the PMOS limit switch 14 is below the maximum specified gate-source voltage, and thus is useful in protecting the limit switch itself. When the control switch 7 is turned off, the magnetizing current and reflected output current (via the leakage inductance) continues to flow. In a conventional circuit this would flow though the backgate diode 81 of switch 8. But, because of the presence of the limiting circuit this is no longer possible; rather, the current now flows via diode 25.

Optional diode 19, can be effective in ensuring proper operation of the reset switch 8, as will now be explained: the reset switch 8 can be turned on by applying a higher voltage to its gate compared with the voltage at its source. However, the voltage at the source of the reset switch (that is, at the first node 13) can be up to 400V when the reset switch has to be on. This implies that the gate must be charged to about 410V, However, this high voyage is not available and must therefore be generated. A common way to achieve this is to apply a so called boost capacitor to first node 13 which is charged to about 10V when the voyage at first node 13 is zero. Once the voltage at first node 13 increases, the voltage at this charged capacitor stays then at 10V relative to the voltage at first node 13, To be able to charge this capacitor with at 10V voltage source, the voltage at first node 13 must become zero, which is achieved by optional diode 19. If diode 19 was not present, node 1 is floating when the limit switch is open and the boosting circuit does not work property.

Various waveform associated with this embodiment are shown in Figure 6. Figure 6 shows, from the top, the statuses 21 and 22 of the control switch 7 and reset switch 8, and the voyage 23 at the half bridge node 2, ail of which are the same as those shown in Figure 2. However, the figure also shows at 6 the voltage Vclamp at node 13 (dashed line) and at 62 the sum of the half bridge voltage $V_{HB\_PRIM}$ and the reset voltage $V_{RESET}$ (solid line). That is to say, the Figure shows at 62 the voltage at the second node 11.

While the control switch is on (that is, during period Ton), the voltage Vclamp art 611 is prevented from going negative, by virtue of the fact that the Vclamp node 13 is clamped to a threshold voltage by limiting circuit 12. The voltage, across the reset switch 8 is thus equal to the input voltage ($V_{IN}$) minus the threshold voltage. Equally, during the period when the control switch 7 is off. the voltage Vclamp at the node 13 is tied to the input voltage $V_{IN}$, by virtue of the fact that the reset switch 8 is closed, and, trivially, there is no voltage across the reset switch (neglecting the effects of the switch's on-resistance Rdson). It is thus seen that at all times the voltage across the reset switch is no more than the input voltage of $V_{IN}$.

A diode 18 may optionally be placed in parade! with the resistor 16: incision of such a diode ensures that the gate of limit switch 14 will never be below ground level which could otherwise occur via capacitor 9 and the parasitic gate-drain capacitance of switch 14 when control switch 7 is turned on.

Further, a second diode 25 may be placed between the input node 10 and node 11 inclusion of such a diode 25 ensures that the voltage across primary control FET is properly clamped in case the clamping circuit reacts too late. Thus, as shown at 613 in Figure 8, the clamping is effected even prior to dosing at the reset switch 8 Although some level of clamping would be provided via the back-gate diodes of reset switch 8 and limit switch 14, to ensure fast and rebust operation an external parallel diode 25 is used. Another advantage of this diode is that, because of the transformer's leakage current, a high current spike can flow via this diode and therefore the clamping circuit can be designed for a low current.

Moreover, a diode may optionally be placed between node 13 and 2; inclusion of such a diode ensures that the voltage at node $V_{CLAMP}$ is at ground level whenever the primary control FET 7 is on. Beneficially, this may ensure a good boosting supply of the driver stage that controls the reset switch 8.

It will be apparent to the skilled person that with the above arrangement, the transformer ratio can be changed (thereby increasing $VF_{RESET}$) *without* increasing the maximum voltage at the reset switch, with the advantage of lowering the maximum voltages at the secondary side of the forward converter-In particular, when changing the transformer ratio lowering Ns), the voltage at the secondary side reduces according to the previous mentioned formulas:

$$V_{SEC} = V_{IN} \cdot \frac{N_S}{N_P} \qquad (10)$$

$$V_{SEC} = -V_{RESET} \cdot \frac{N_S}{N_P} \qquad (11)$$

The advantage of lowering the secondary voltage is that the required breakdown voltage of the secondary diodes reduces. In the circuit Figure 4 the secondary diodes are replaced by FET to increase the efficiency of the system. A lower breakdown voltage of these FETs will reduce the price of these FETs.

Changing the transformer ratio implies that also the duty cycle increase:

$$V_{OUT} = \delta \cdot V_{IN} \cdot \frac{N_S}{N_P} \qquad (12)$$

and as a result, the reset voltage increases,

$$V_{RESET} = V_{IN} \cdot \frac{\delta}{(1-\delta)} \qquad (13)$$

which again implies that the required breakdown of the primary switches have to be increased. According to embodiments of the inventions it is possible to do so, without actually increasing the breakdown voltage of the reset switch.

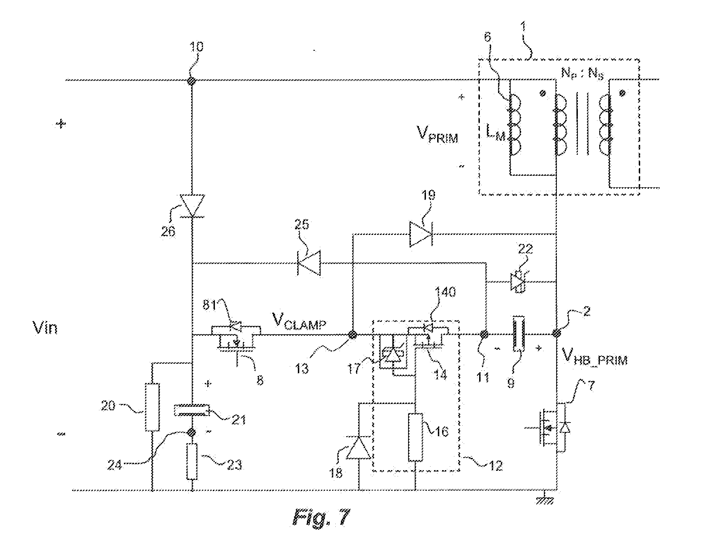

A circuit in accordance with a further embodiment of the present invention is shown in figure 7. This figure shows an active clamping applies in a forward converter, which circuit is generally similar to that shown in Figure 5. Thus the active clamping circuit again consists of a reset switch 8, a limiting circuit 12 and a reset capacitor 9. However, in this embodiment the drain of the reset switch 8 is connected to a first terminal of capacitor 21 which has its second terminal at a node 24 which is connected via a sense resistor 23 to ground. Further, an additional diode 26 is introduced in series between the reset switch 8 and the input voltage node 10. Finally, an optional Zener diode 22 may be included in parallel with the capacitor 9, that is to say between the second node 11 and the half bridge node 2.

Operation of this circuit is in general identical to that of the first embodiment: however, diode 26 ensures that the minimum voltage across capacitor 21 equals the input voltage. Resistor 20 is included in order to ensure that, in the event of leakage from capacitor 9, the voltage across capacitor 21 does not increase above the input voltage.

Advantageously, in this embodiment, by including a sense resistor 23, the voyage at node 24 (relative to ground), is a measure of the magnetizing current through the transformer Once the voltage at node 24 exceeds a certain it indicates a fault condition, such as a shorted transformer.

Use of an extra series capacitor 21 provides another advantage in that, by applying a Zener diode 22 across the reset capacitor 9, the DC voltage deviation between the two capacitors 9 and 21 can be controlled to any level: if, for instance, a zener diode of 50V is used, the voltage at capacitor 21 equals the maximum voyage at the half bridge node 2 $V_{HB\_PRIM}$ minus 50 V, since the Zener diode 22 constrains the voltage across reset capacitor 9 to be no more than the Zener's breakdown voltage of 50V. The required BVds of the PMOS limit switch 14 then also need be no higher than 50V (before taking into account the necessary design margins for input voltage transients and possible derating requirements).

In summary, then, from one viewpoint a limiting circuit for an active clamp comprising a reset switch and reset capacitor, for use in particular with a forward converter, has been disclosed. The limiting circuit provides for limiting the voltage across the reset switch by disconnecting the reset switch from the reset capacitor during a part of the switching cycle when the voltage across reset capacitor is too negative. The reset switch may be grounded by the limiting circuit or clamped to another reference voyage. In another embodiment of the reset switch is capacitively coupled to ground and thereby enabling detection of fault conditions Further, the voltage across a switch of limiting circuit may be constrained by the breakdown value of a Zener diode.

From reading the present disclosure, other variations and modification will be apparent to the skilled person. Such variations and modifications may involve equivalent and other features which are already known in the art of forward converters, and which may be used instead of, or in addition to, features already described herein.

Although the appended claims are directed to particular combinations of features, it should be understood that the scope of the disclosure of the present invention also includes any novel feature or any novel combination of features disposed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A limiting circuit (12) configured for use in an active clamping circuit for a DC-DC converter,
   the active clamping circuit comprising a series arrangement of a switch (8) and a capacitor (9),
   wherein the limiting circuit (12) comprises a first node (13) and a second node (11),
   is configured to be connected in series between the switch (8) and the capacitor (9) such that the first node (13) is connected to the switch (8) and the second node (11) is connected to the capacitor (9),
   and is arranged to, in use, limit the voltage across the switch (8).

2. A limiting circuit according to claim 1, configured to connect the first node (13) to the second node (11) or not, in dependence on the voltage at the second node (11),

3. A limiting circuit according to claim 1 or 2, further comprising a limit switch (14) connected between the first node and the second node and having a control terminal which is connected to a non-negative voltage by means of a resistance (16), and a bypass diode (140) connected between the first node and the second node, such that, in use, the voltage across the switch (8) is limited to no more than an input voltage of the converter less the sum of the non-negative voltage and a threshold voltage of the limit switch (14),

4. A limiting circuit according to claim 3, wherein the non-negative voltage is ground

5. A limiting circuit according to claim 3, further comprising a Zener diode (17) between the first node and the control terminal

6. A Smiting circuit according to claim 4 or 5, further comprising at least one of a first diode (18) connected between the control terminal and the ground, and a second diode (19) arranged to be connected between the first node (13) and a terminal (2) of the capacitor (9) opposite that connected to the second node (11), and a third diode(25) arranged to be connected between the second node (11) and a terminal of the switch (8) opposite that connected to the first node (13).

7. A circuit arrangement for a DC-DC converter, the controller comprising a limiting circuit (12) according to any of claims 2 to 5 and a sub-circuit (20,21,23) configured to be connected between the terminal of the switch (8) opposite the first node and the ground.

8. A circuit arrangement according to claim 7 wherein the sub-circuit comprises a parallel resistor (20) arranged in parallel with series combination of a capacitor (21) and a sense resistor (23).

9. A circuit arrangement according to claim 7 or 8, further comprising a Zener diode (22) configured to be connected between the second node and a terminal of the capacitor opposite to that connected to the second node.

10. A controller for a forward converter comprising a limiting circuit (12) according to any preceding claim.

11. A method of limiting the voltage across a switch which forms part of a clamping circuit for a forward converter, the switch being connected between an input terminal of the forward converter and a first node, the clamping circuit further comprising a capacitor connected between a half-bridge node of the forward converter and a second node, the method comprising connecting the first node to the second node or clamping toy ground, in dependence on the voltage at the second node and by means of a limit switch.

12. The method of claim 11, further comprising limiting the voltage across the limit switch by means off series arrangement of a further capacitor and a sense resistor, the series arrangement being connected, in parallel with a further resistor, between the terminal of the switch which is opposite the first node and ground, there being a diode between the terminal of the switch which is opposite the first node and the input terminal of the forward converter, together with a Zener diode between the second node and the half-bridge node.

**Amended claims in accordance with Rule 137(2) EPC.**

1. A limiting circuit (12) configured for use in an active clamping circuit for a DC-DC converter, the active clamping circuit comprising a series arrangement of a switch (8) and a capacitor (9), wherein the limiting circuit (12) comprises a first node (13) and a second node (11), is configured to be connected in series between the switch (8) and the capacitor (9) such that the first node (13) is connected to the switch (8) and the second node (11) is connected to the capacitor (9), is configured to connect the first node (13) to the second node (11) or not, in dependence on the voltage at the second node (11), and further comprises a limit switch (14) connected between the first node and the second node and having a control terminal which is connected to a non-negative voyage by means of a resistance (16), and a bypass diode (140) connected between the first node and the second node, such that, in use, the voltage across the switch (8) is limited to no more than an input voyage of the converter less the sum of the non-negative voltage and a threshold voltage of the limit switch (14).

2. A limiting circuit according to claim 1, wherein the non-negative voltage is ground.

3. A limiting circuit according to claim 1, further comprising a Zener diode (17) between the first node and the control terminal.

4. A limiting circuit according to claim 2 or 3, further comprising at least one of a first diode (18) connected between the control terminal and the ground, and a second diode (19) arranged to be connected between the first node (13) and a terminal (2) of the capacitor (9) opposite that connected to the second node (11), and a third diode(26) arranged to be connected between the second node (11) and a terminal of the switch (8) opposite that connected to the first node (13).

5. A circuit arrangement for a DC-DC converter, the controller comprising a limiting circuit (12) according to any of claims 1 to 3 and a sub-circuit (20,21,23) configured to be connected between the terminal of the switch (8) opposite the first node and the ground, wherein the sub-circuit comprises a parallel resistor (20) arranged in parallel with series combination of a capacitor (21) and a sense resistor (23).

6. A circuit arrangement according to claim 5 , further comprising a Zener diode (22) configured to be connected between the second node and a terminal of the capacitor opposite to that connected to the second node.

**7.** A controller for a forward converter and comprising a limiting circuit (12) according to any preceding claim.

**8.** A method of limiting the voyage across a switch which forms part of a clamping circuit for a forward converter, the switch being connected between an input terminal of the forward converter and a first node, the clamping circuit further comprising a capacitor connected between a half-bridge node of the forward converter and a second node, the method comprising connecting the first node to the second node or clamping to a ground, in dependence on the voltage at the second node and by means of a limit switch.

**9.** The method of claim 8, further comprising limiting the voltage across the limit switch by means of a series arrangement of a further capacitor and a sense resistor, the series arrangement being connected, in parallel with a further resistor, between the terminal of the switch which is opposite the first node and ground, there being a diode between the terminal of the switch which is opposite the first node and the input terminal of the forward converter, together with a Zener diode between the second node and the half-bridge node.

Fig. 1

Fig. 2

Fig. 3

Fig. 4

Fig. 5

Fig. 6

Fig. 7

**Europäisches Patentamt**
**European Patent Office**
**Office européen des brevets**

# EUROPEAN SEARCH REPORT

Application Number

EP 09 16 2102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAE-KUK KIM ET AL: "A novel two-switch active clamp forward converter for high input voltage applications" POWER ELECTRONICS SPECIALISTS CONFERENCE, 2008. PESC 2008. IEEE, IEEE, PISCATAWAY, NJ, USA, 15 June 2008 (2008-06-15), pages 3028-3034, XP031300422 ISBN: 978-1-4244-1667-7 Paragraph V. - Topological Extension* figure 7 * | 1,2,7, 10,11 | INV. H02M1/34 H02M3/335 |
| X | MELITO M ET AL: "SWITCHING BALANCEMENT OF SERIES CONNECTED INSULATED GATE DEVICES BYGATE CONTROL STRATEGY" EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, vol. 4, 8 September 1997 (1997-09-08), pages 4034-4038, XP000768129 ISBN: 978-90-75815-02-3 * page 4035; figure 1 * | 1,2,7,11 | |
| X | US 6 380 793 B1 (BANCAL BERNARD [FR] ET AL) 30 April 2002 (2002-04-30) * column 2, line 53 - column 3, line 6; figure 2 * | 1,2,7,11 | |

TECHNICAL FIELDS SEARCHED (IPC)

H02M
H03K

-/--

The present search report has been drawn up for all claims

| Place of search | Date of completion of the search | Examiner |
|---|---|---|
| Munich | 24 August 2009 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## EUROPEAN SEARCH REPORT

Application Number

EP 09 16 2102

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KI-BUM PARK ET AL: "Three-Switch Active-Clamp Forward Converter with Low Switch Voltage Stress" APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 1390-1396, XP031442868 ISBN: 978-1-4244-2811-3 * the whole document * | 1-12 | |
| A | US 6 628 532 B1 (RINNE KARL [IE] ET AL) 30 September 2003 (2003-09-30) * column 4, line 23 - column 5, line 30; figures 8,9 * | 1-12 | |

TECHNICAL FIELDS
SEARCHED (IPC)

The present search report has been drawn up for all claims

| Place of search | Date of completion of the search | Examiner |
|---|---|---|
| Munich | 24 August 2009 | Braccini, Roberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 16 2102

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2009

| Patent document cited in search report | | Publication date | Patent family member(s) | | Publication date |
|---|---|---|---|---|---|
| US 6380793 | B1 | 30-04-2002 | EP | 1096681 A1 | 02-05-2001 |
| | | | FR | 2800532 A1 | 04-05-2001 |
| | | | JP | 2001168698 A | 22-06-2001 |
| US 6628532 | B1 | 30-09-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4441146 A